# EUROPEAN PATENT SPECIFICATION

(11) **EP 2 875 616 B1**
(45) Date of publication and mention of the grant of the patent: **09.08.2017**
(21) Application number: 13730206.3
(22) Date of filing: 17.06.2013
(51) Int. Cl.: H04L 12/801, H04L 12/859, H04W 28/06, H04W 88/16, H04L 12/853, H04L 12/825

(54) **CONTENT OPTIMIZATION BASED ON REAL TIME NETWORK DYNAMICS**
INHALTSOPTIMIERUNG AUF DER BASIS VON ECHTZEIT-NETZWERKDYNAMIK
OPTIMISATION DE CONTENU FONDÉE SUR LA DYNAMIQUE DE RÉSEAU EN TEMPS RÉEL

(30) Priority: 20.07.2012 US 201213554302
(43) Date of publication of application: 27.05.2015
(73) Proprietor: Nokia Solutions and Networks Oy, 02610 Espoo (FI)
(72) Inventor: YE, Yinghua, Santa Clara, California 95050 (US); LAKSHMI NARAYANAN, Ram, Sunnyvale, California 94089 (US)
(74) Representative: Borgström, Markus
(86) International application number: PCT/EP2013/062457
(87) International publication number: WO 2014/012724

(56) References cited:
- EP-A1- 2 472 946
- WO-A1-2010/140015

## Description

### Technical Field

The exemplary and non-limiting embodiments of this invention relate generally to wireless communications and more specifically to adaptive content optimization based on real time network dynamics.

### Background Art

In the publication WO 2010/140015 A1 (ERICSSON TELEFON AB L M [SE]; ARVIDSSON AAKE [SE]; WESTHOLM TORD [SE]), 9 December 2010, apparatuses and methods are described for communicating, from one network node to another network node, congestion information. Advantageously, the congestion information may be communicated at a per-packet level so that the node receiving the congestion information may meter the network usage of a user based, at least in part, upon the level of network congestion experienced by each packet sent or received by the user.

According to the publication EP 2472946 A1 (TEKTRONIX INC [US]), 4 July 2012, the data rate for video data being transmitted through a wireless network is adjusted based upon cell congestion levels. A network monitoring system identifies the congestion levels in network cells based upon data traffic captured from network interfaces. When a cell congestion level reaches a first level, an alert is sent to a video transcoding device. The video transcoding device adjusts the data rate for video data being sent to one or more subscribers in the congested cell. The data rate adjustments may be based upon a subscriber profile or a user equipment type. When cell congestion levels drop below a second threshold, the monitoring system sends a second alert indicating that the data rate can be increased.

The following abbreviations that may be found in the specification and/or the drawing figures are defined as follows:
- 3GPP: third generation partnership project
- API: application programming interface
- BS: base station
- CAGR: compound annual growth rate
- DL: downlink
- DPI: data packet inspection
- EPC: evolved packet core
- E-UTRA: evolved universal terrestrial radio access
- eNB or eNodeB: evolved node B /base station in an E-UTRAN system
- E-UTRAN: evolved UTRAN (LTE)
- GPRS: general packet radio service
- GTP: GPRS tunneling protocol
- http: hypertext transfer protocol
- ID: identification, identifier
- IP: internet protocol
- LTE: long term evolution
- LTE-A: long term evolution advanced
- MAC: message authenticate code
- MCO: mobile content optimizer
- PCRF: policy control and charging rules function
- PGW: packet gateway
- QoE: quality of experience
- QoS: quality of service
- SGW: serving gateway
- SSL: secure sockets layer
- UE: user equipment (e.g., mobile terminal)
- UDP: user datagram protocol
- UL: uplink
- UMTS: universal mobile telecommunications system
- URL: uniform resource locator
- UTRAN: universal terrestrial radio access network

Compound annual growth rate (CAGR) of 92 percent from 2010 to 2015 will reach 6.3 exabytes per month by 2015, and two-thirds of the world's mobile data traffic will be video by 2015, see White paper: Cisco Visual Networking Index: Global Mobile Data Traffic Forecast Update, 2011-2016, 2012. This has brought great challenges to operator networks. A survey (see Lightreading, "Wireless Ops Blamed for Poor Mobile Video Quality", Jan 31 2012) has shown that 74% of mobile users hold operators most responsible for their video stalling, buffering or taking too long to start when streaming over their mobile network, and has found that slow browsing speed would cause 43% of respondents to consider switching operators, while another 24% said that buffering and poor video quality would cause them to consider switching. Moreover, 47% of mobile users said they are frustrated when video takes too long to play and 45% are discouraged by non-continuous, interrupted play.

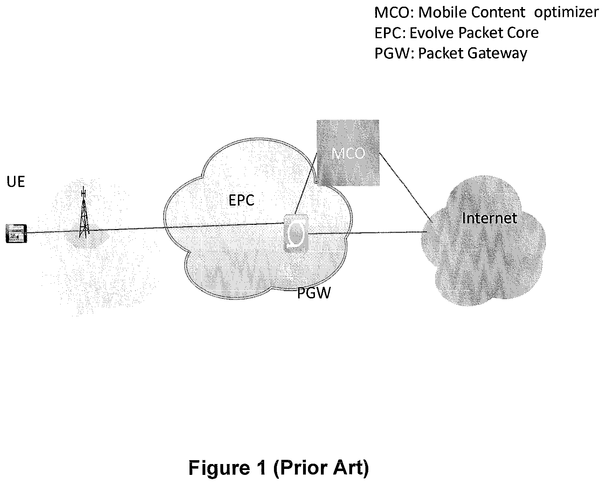

Mobile content optimization (MCO) has been used as an effective tool for operators to reduce the excessive mobile data entering mobile networks without sacrificing the user experience. Since the majority mobile data traffic is http-based video, the mobile optimization is targeting at mobile video type of applications. Figure 1 shows a basic mobile optimization architecture. It leverages DPI function at EPC (using, e.g., either Serving Gateway or Packet Gateway (PGW)) to intercept the suspecting video/image URL requests from UEs and forward them to mobile content optimizer (MCO) for optimization purposes.

### Summary:

The present invention is defined by the independent claims 1 and 10, to which reference should now be made. Specific embodiments are defined by the dependent claims. According to a first aspect of the invention, a method, comprising: determining by a network element of a network core a load status of at least one access point wirelessly communicating with one or more user equipments; adding by the network element information comprising at least the load status or a congestion status mapped from the load status of the at least one access point to a mobile content request from at least one user equipment of the one or more user equipments; and sending by the network element to a mobile content optimizer the mobile content request with the added information for optimizing a requested mobile content using the added information.

According to a second aspect of the invention, a method, comprising: receiving, by an apparatus comprising a mobile content optimizer from a network element of a network core, information comprising at least a load status or a congestion status mapped from the load status of the at least one access point wirelessly communicating with one or more user equipments along with a mobile content request from at least one user equipment of the one or more user equipments; optimizing by the apparatus a requested video content using the received information; and sending by the apparatus the optimized mobile content to the at least one user equipment.

According to a third aspect of the invention, an apparatus comprising: at least one processor and a memory storing a set of computer instructions, in which the processor and the memory storing the computer instructions are configured to cause the apparatus to: determine a load status of at least one access point wirelessly communicating with one or more user equipments; add information comprising at least the load status or a congestion status mapped from the load status of the at least one access point to a mobile content request from at least one user equipment of the one or more user equipments; and send to a mobile content optimizer the mobile content request with the added information for optimizing a requested mobile content using the added information.

According to a fourth aspect of the invention, an apparatus comprising: at least one processor and a memory storing a set of computer instructions, in which the processor and the memory storing the computer instructions are configured to cause the apparatus to:_receive, from a network element of a network core, information comprising at least a load status or a congestion status mapped from the load status of the at least one access point wirelessly communicating with one or more user equipments along with a mobile content request from at least one user equipment of the one or more user equipments; optimize a requested video content using the received information; and send the optimized mobile content to the at least one user equipment.

### Brief Description of the Drawings:

For a better understanding of the nature and objects of the present invention, reference is made to the following detailed description taken in conjunction with the following drawings, in which:
Figure 1 is a diagram of a typical MCO architecture;
Figure 2 is an example illustrating fair use policy;
Figure 3 is a diagram demonstrating load update protocol, according to an exemplary embodiment of the invention;
Figure 4 is a diagram demonstrating adaptive mobile content optimization, according to an exemplary embodiment of the invention;
Figure 5 is a diagram demonstrating MCO functionality/performance for implementing embodiments of the invention;
Figure 6 is a flow chart demonstrating implementation of exemplary embodiments of the invention by a network element in an EPC;
Figure 7 is a flow chart demonstrating implementation of exemplary embodiments of the invention by a MCO; and
Figure 8 is a block diagram of network elements for practicing exemplary embodiments of the invention.

### Detailed Description

The objectives of the MCO are providing content adaptation based on the following factors which may be facilitated by embodiments described herein.

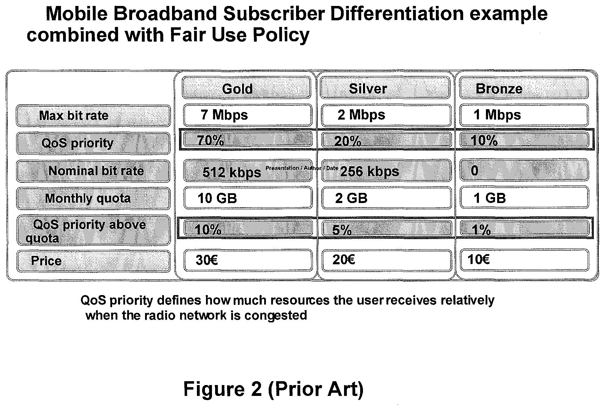

Available bandwidth to users: it depends on the degree of network congestion, a type of content being requested, a device being used by a user and a user's subscription. Current commercially available MCO such as SKYFIRE has classified network congestion into high congestion, medium congestion, low congestion, and no congestion, so that it provides different video content compression ratio based on the network congestion level. User's subscription also can affect the bandwidth that is available to a UE (user). The operators have started to adopt several mobile data plans, and users are given different data treatments based on their plans as shown in Figure 2. There are two major reasons why operators are interested in the MCO. First, network traffic is exploding due to the video traffic and operators keep upgrading their equipments, but return of investment is not directly proportional to the traffic growth. Secondly, operators want to control the traffic growth in a controlled fashion by implementing some fair usage policy. For these reasons the operators explore different data plans based on certain application usage and/or available bandwidth and/or subscriber user data for Internet Pricing and economics. This drives the need for mobile optimizers in the network.
- Device type: this determines the screen size of the target play.
- Metadata of the content: the metadata contains the description how the video content is constructed so that the receiving client can interpret the content properly. Usually the metadata is included in first few packets of http video response flow from the server to the client.
- Content policy: this depends on the agreement between the mobile operator and the content provider, this policy could include whether the content is allowed to be modified/cached etc.

In the existing solutions, the network congestion condition is preconfigured manually for all requests going through mobile content optimizer. In the case of video optimization, there is no adaptive compression mechanism support, i.e., one setting is used throughout the video optimization process no matter how network conditions may change. Currently the EPC doesn't provide network load information to the mobile content optimizer (MCO) engine.

Due to the introduction of multi-tier data plans, every user is treated differently based on the subscription information. Figure 2 gives one example how multi-tier plan works, the users are classified into Gold, Silver, and Bronze classes when they pay 30 euro, 20 euro and 10 euros. As a result, the maximum bit rate that Gold users can get is 7 Mbps, silver users can get 2 Mbps maximum bit rate and Bronze users can only get 1 Mbps. Also users of different subscription classes get different QoS priorities when the radio network is loaded. However, there is not any mobile content optimizer (MCO) taking the subscription information into account when it performs optimization.

A new method, apparatus, and software related product (e.g., a computer readable memory) are presented for adaptive content optimization based on real time network dynamics including at least a network load (congestion) status on a cell/access point (eNB) level and a UE subscription status. According to exemplary embodiments of the invention, the following mechanisms may be used. First, a network element of a network core such as PGW of an EPC can determine a load status of at least one access point (eNB, base station) wirelessly communicating with one or more UEs using for example one of the two approaches described herein. Then the EPC (or the network core in general) can enhance the existing protocol between the EPC and MCO to carry real time load information from the serving eNB for a mobile content (e.g., video) request from at least one UE wirelessly communicating with the serving eNB to the MCO. Thus the mobile services can be provided by the MCO to the at least one UE based on the serving eNB load condition. Moreover, integrating subscription information for the UE requesting mobile content (video) with the serving eNB real time load dynamics may allow the MCO to provide more accurate estimation over the available bandwidth for the mobile content sent to the UE, thus enhancing Quality of Experience (QoE) of the UE.

According to one embodiment of the invention, an eNB load status discovery may include (but not be limited to) uplink/downlink radio load, backhaul network load and eNB processing load. Two eNB load status discovery approaches may be practiced according to exemplary embodiments of these teachings to enable the EPC be aware of the load status at each eNB.

A first approach is to develop a load update protocol between the eNB and the EPC informing the load state (or status) change from the eNB to the EPC. In this approach, the eNB load status may be determined/defined as a maximum of the radio load, backhaul network load, and eNB processing load, and the eNB load status can be mapped into a congestion status. The reason for such mapping is to reduce the frequency of load update messages to the MCO. Here is an example of such mapping:

| Load status | >0.75 | 0.5-0.75 | 0.25-0.5 | <0.25 |
|---|---|---|---|---|
| Congestion status | High congestion | Medium Congestion | Low congestion | No Congestion |

It is noted that using this type of mapping is not mandatory and the operators and/or MCO may define their own load, and have their own definition of congestion levels/load levels as well.

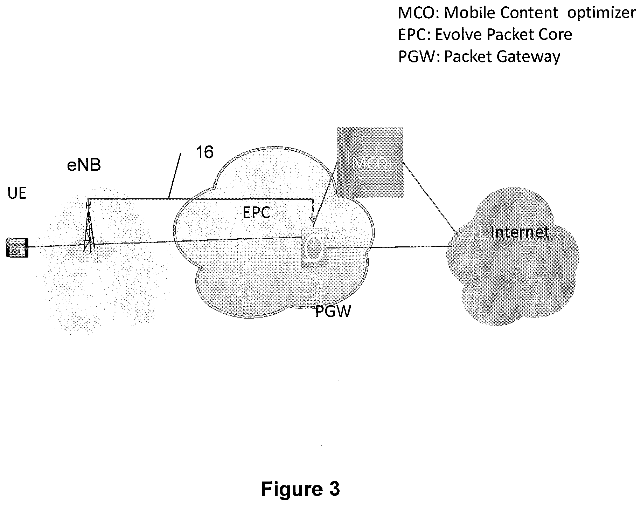

The load update protocol signal 16 seen at Figure 3 may be UDP based and one directional, i.e., from the eNB to the EPC as shown in Figure 3. As these messages are sent over UDP, when few messages are not received by the EPC, it can use other means. For example, if this message is sent periodically (at least repeated once) and one of the messages is lost, then the probability that the repeated message will be successfully received is high. Alternatively, the eNB can monitor load information from its own relevant modules (such as scheduler, back-haul transport module, etc.). The information carried by the load update protocol may include the eNB address and congestion status. To reduce the overhead brought by the load update protocol, the eNB may send the load update only when the congestion status at the eNB changes.

In a second approach, the EPC may obtain the eNB load status through aggregating the throughput of GTP tunnels from a given eNB. Since all the UE data traffic goes through an EPC gateway, the EPC can monitor the traffic status from a given UE. However, by monitoring per UE traffic, it will be difficult to scale up over thousands of UEs and the UE traffic status would vary a lot due to radio reception. To overcome such problems, the EPC can monitor an aggregated traffic status per eNB. Since the UE traffic passes between the eNB and EPC through GTP tunnels, the EPC can monitor both incoming GTP tunnels from a specific eNB and outgoing GTP tunnels to the specific eNB. For a given eNB, the EPC can identify the GTP tunnels through tunnel IDs, which are assigned during the tunnel establishment. By monitoring the traffic load of these GTP tunnels, the EPC can estimate the eNB load. Compared to the load update protocol (the first approach), the EPC using load estimation (the second approach) is not as accurate since it only measures the throughput data and link status between the EPC and eNB.

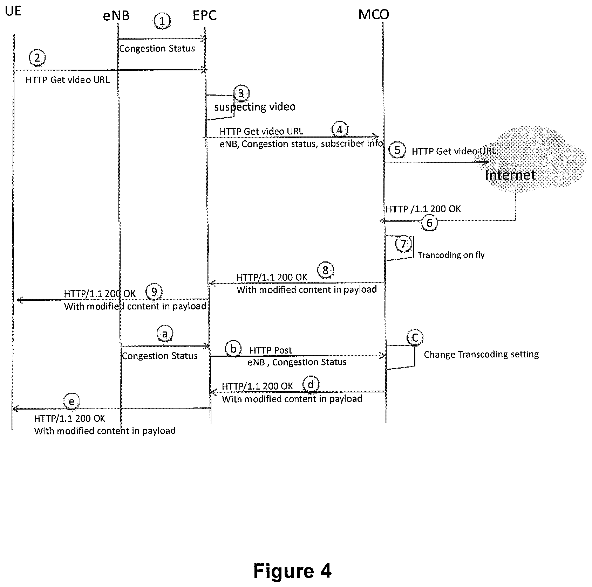

In a further exemplary embodiment, the adaptive mobile content optimization is illustrated in Figure 4 showing, for example, how eNB load information can be used as an input for mobile content optimization. Practically the EPC can feed such information to any mobile services as API. The mobile video optimization is used as an example in Figure 4 to illustrate how to realize the adaptive content optimization based on real time network dynamics as explained below.
Step 1: an eNB sends an EPC its load status;
Step 2: a UE sends a HTTP GET (e.g., a fetch request) with a video URL;
Step 3: a DPI engine at the EPC intercepts the HTTP GET, and concludes that the video URL inside the HTTP GET might be indication of a video content;
Step 4: the EPC adds a serving eNB address, a congestion status of the serving eNB and UE subscriber information (as further explained below) into http option headers (or it could append at the end of the URL itself, which then gets stripped off by a MCO before forwarding to the internet) of the received HTTP GET;
Step 5: the MCO extracts and processes the http option headers of the received HTTP GET URL, stores the serving eNB address, subscriber info and serving eNB congestion status information and strips off the option header, and further forwards the received http request to the distant server (or distant video server) via the internet, where the distant server, e.g., is a part of the internet;
Step 6: the distant video server responds with HTTP/1.1 200 OK with the video content (with metadata) in payload to the MCO;
Step 7: a MCO engine optimizes the mobile content according to the load condition, UE subscriber information (as further explained below) and a device type etc.;
Steps 8-9: the MCO sends the optimized content to the UE via a HTTP /1.1 200 OK message;
Step a: if the load of the serving eNB changes during the video streaming (or even before the video streaming started but after step 4), the eNB sends a load update to the EPC;
Step b: the EPC sends the update of the load change of the serving eNB to the MCO via a HTTP post message, which contains the serving eNB address and congestion status;
Step c: the MCO engine updates one or more of setting to perform transcoding, transrating, transizing, etc. of the mobile video optimization for the video content served by the serving eNB: thus the MCO can adaptively optimization mobile content based on real time dynamics;
Steps d-e: the optimized content is delivered to the UE by the MCO.

In a further embodiment, a fair use policy based on the subscription information may be integrated with the serving eNB real time load dynamics. As mentioned herein, operators are prone to enforce the fair use policy in their networks, and the fair use policy is based on the subscription information, for example as shown in Figure 2. Only relying on the network congestion cannot determine the available bandwidth a given UE might have. In this embodiment, incorporating a per UE based fair use policy and real time network traffic dynamic to available bandwidth estimation process may be performed, hence improving the accuracy of the estimation. This approach assumes the operator has knowledge about the available bandwidth to different subscription classes of UEs as shown in Figure 2.

The EPC gateway has an interface with a PCRF server and can get UE's subscription information indicating which subscription class the UE belongs to based on its billing plan. During the UE's initial attachment, the EPC gateway can obtain the UE subscription information from the PCRF. From the subscription information, the EPC may be able to determine whether the UE belongs e.g., to GOLD, SILVER or BRONZE status.

When the EPC intercepts the suspecting video URL request from the UE (see step 3 in Figure 4), it may add the UE's subscription status/class as one of http optional headers just like for congestion status in step 4 of Figure 4. For example, if the UE belongs to GOLD class, HTTP GET will have the optional header "subscription status: GOLD".

Upon receiving a modified HTTP GET from the EPC, the MCO can extract the optional header information including the eNB IP address, eNB congestion status and UE subscription class, and estimate the potential bandwidth available to the UE based on a predefined rule at the MCO. If the subscription information changes, the PCRF will notify the EPC about such change, and the EPC will inform the MCO about the change via the HTTP post message with a proper option header. Most of the time, the user's subscription information doesn't change too often, but the eNB congestion status may be updated more frequently.

It is further demonstrated herein how embodiments of the invention can be applied. For example, operator sells 5 GB/month and 2 GB/month as plan-A and plan-B, respectively, to users. It may happen that a heavy users consume more data, and a user-A (GOLD) can reach the datacap before his time elapsed. Then the user-A plan may be reduced to a lower status, and that dynamic subscription and consumption rate must be communicated to the MCO, so that those users who have reached data cap will be treated differently.

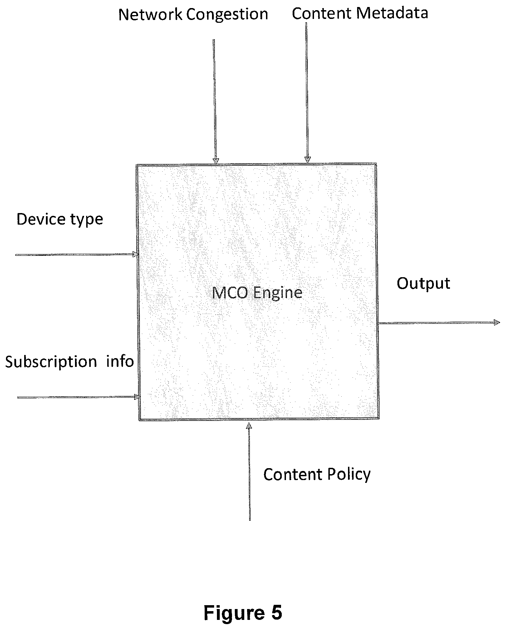

Then operator can come up with a different policy on how to treat a subscriber, and how the traffic should be treated, etc. The mechanism proposed in embodiments described herein enables operators to come up with different permutations. Information such as Device Type, Subscription Policy, Usage time/volume, Congestion, Content being accessed can be used to derive the policy and is further illustrated in Figure 5.

Figure 5 demonstrate how a MCO engine can perform according to embodiments described herein based on metadata of intended content e.g., provided by an internet server (step 6 in Figure 4), and other input information such as UE device type and operating system, network congestion per eNB and UE subscriber information (step 4 in Figure 4), etc. Using this input information, the MCO can provide an optimized output (steps 7-9 in Figure 4) according to embodiments described herein.

It is noted that two types of UE information may be derived by the MCO. First, when a user makes http request from the URL, http request contains the operating system information in the http request (e.g., ANDRIOD, WINDOWS or even APPLE iOS, etc.). Second, the subscriber information records received through the PCRF can contain the device type.

Advantages of the described embodiments include but are not limited to:
enabling the mobile content optimization engine to provide more effective mobile optimization without compromising user experience;
developing network traffic monitor mechanism allowing the EPC to pinpoint the congestion situation at a cell sector level in the eNB, so that providing network congestion information at such fine level may assists mobile applications such as MCO to better perform the content optimization process for every UE;
enabling dynamic content adaption based on the real time network load at the serving eNB for a given UE, which can reduce/minimize the number of stalls that the UE may experience when the mobile content is loaded, thus optimizing user experience according to available bandwidth constraints;
correlating with the UE subscription profile and network congestion at the eNB may provide more accurate estimation of the bandwidth available to the UE, thus the mobile services such as MCO can better tailor the mobile content to the UE based on the bandwidth limitations; and
no change required on the UE side so that legacy UEs can also be supported by the embodiments described herein.

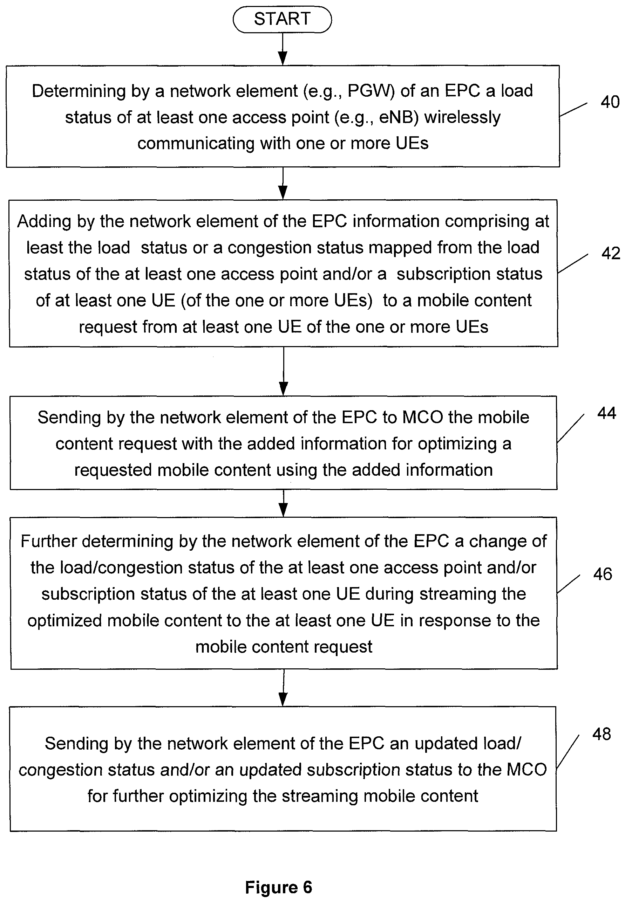

Figure 6 shows an exemplary flow chart demonstrating implementation of embodiments of the invention by a network element (e.g., PGW) in the EPC. It is noted that the order of steps shown in Figure 6 is not absolutely required, so in principle, the various steps may be performed out of the illustrated order. Also certain steps may be skipped, different steps may be added or substituted, or selected steps or groups of steps may be performed in a separate application.

In a method according to this exemplary embodiment, as shown in Figure 6, in a first step **40,** the network element (e.g., PGW) of the EPC receives a load status of at least one access point (e.g., eNB) wirelessly communicating with one or more UEs.

In a next step **42,** the network element of the EPC adds information comprising at least the load status or a congestion status mapped from the load status of the at least one access point and/or a subscription status of at least one UE (of the one or more UEs) to a mobile content request (captured) from the at least one UE of the one or more UEs. In a next step **44,** the network element of the EPC sends to a MCO the mobile content request with the added information for optimizing a requested mobile content such as video using the added information.

In a next step **46,** the network element of the EPC further determines a change of the load/congestion status of the at least one access point and/or the subscription status of the at least one UE during streaming the optimized mobile content to the at least one UE in response to the mobile content request. In a next step **48,** the network element of the EPC sends to the MCO an updated load/congestion status and/or an updated subscription status for further optimizing the streaming mobile content such as video.

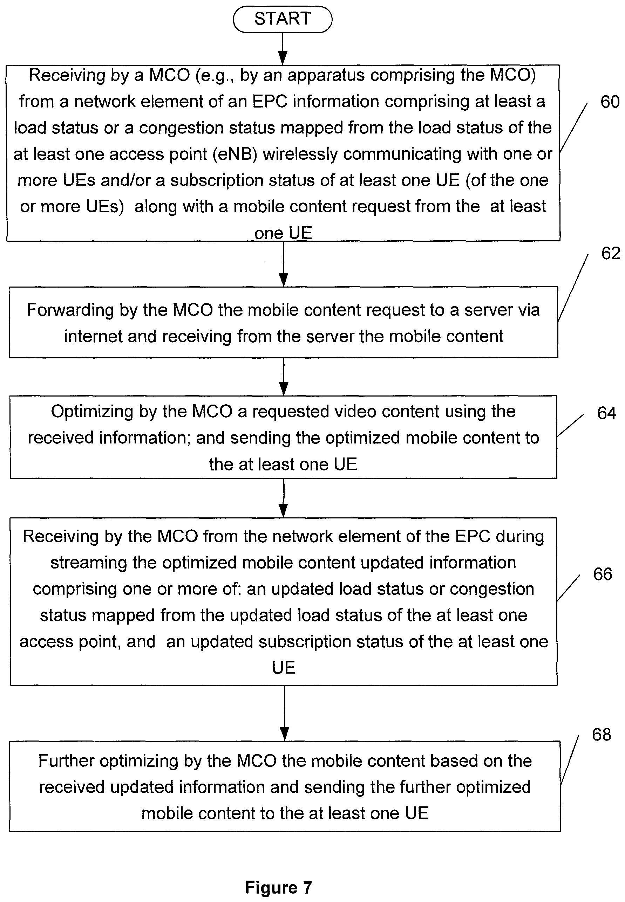

Figure 7 shows an exemplary flow chart demonstrating implementation of embodiments of the invention by an MCO (e.g., by an apparatus comprising the MCO). It is noted that the order of steps shown in Figure 7 is not absolutely required, so in principle, the various steps may be performed out of the illustrated order. Also certain steps may be skipped, different steps may be added or substituted, or selected steps or groups of steps may be performed in a separate application.

In a method according to this exemplary embodiment, as shown in Figure 7, in a first step **60,** the MCO (e.g., the apparatus comprising the MCO) receives from a network element of an EPC information comprising at least a load status or a congestion status mapped from the load status of the at least one access point (eNB) wirelessly communicating with one or more UEs and/or a subscription status of at least one UE (of the one or more UEs) along with a mobile content request from the at least one UE.

In a next step **62,** the MCO forwards the mobile content request to a server via internet and receives from the server the mobile content. In a next step **64,** the MCO optimizes a requested video content using the received information, and sends the optimized mobile content to the at least one UE.

In a next step **66,** the MCO receives from the network element of the EPC during streaming the optimized mobile content updated information comprising one or more of: an updated load status or congestion status mapped from the updated load status of the at least one access point, and an updated subscription status of the at least one UE. In a next step **68,** the MCO further optimizes the mobile content based on the received updated information, and sends the further optimized mobile content to the at least one UE.

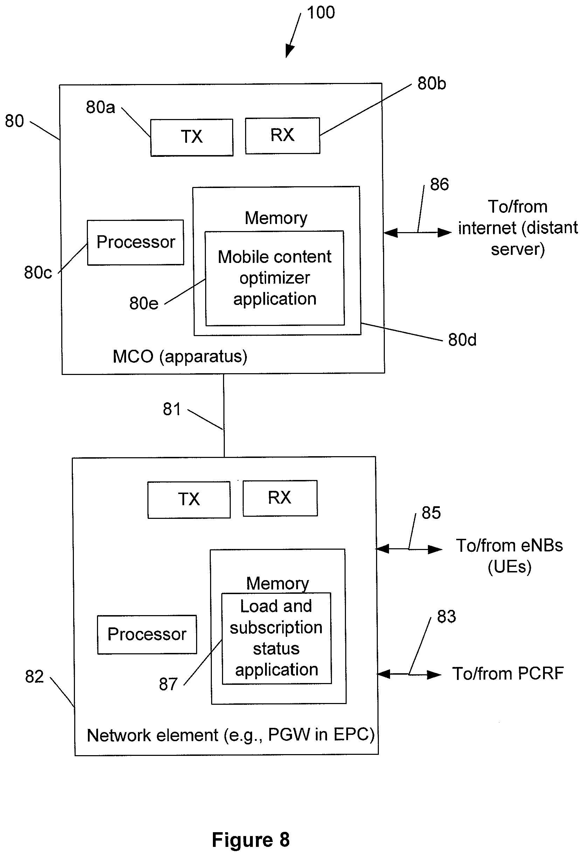

Figure 8 shows an example of a block diagram demonstrating devices including a MCO apparatus **80** comprised in a (LTE) network **100,** and a network element (e.g., PGW of EPC) **82,** according to an embodiment of the invention. It is noted that the MCO apparatus **80** can be placed in a cloud or in the same operator network as the network element **82.** Figure 8 is a simplified block diagram of various electronic devices that are suitable for practicing the exemplary embodiments of this invention, e.g., in reference to Figures 2-7, and a specific manner in which components of an electronic device are configured to cause that electronic device to operate.

The network element **80** may comprise, e.g., at least one transmitter **80a** at least one receiver **80b,** at least one processor **80c** at least one memory **80d** and a mobile content optimizer application module **80e.** The transmitter **80a** and the receiver **80b** may be configured to provide a communication (e.g., wired communication) with the device **82** (and others not shown in Figure 8), e.g., using a link/interface **81,** and with a distant server via internet using link **86,** according to the embodiment of the invention. The transmitter **80a** and the receiver **80b** may be generally means for transmitting/receiving and may be implemented as a transceiver, or a structural equivalence thereof. It is further noted that the same requirements and considerations may be applied to transmitters and receivers of other network devices such as the device **82.**

Various embodiments of the at least one memory **80d** (e.g., computer readable memory) may include any data storage technology type which is suitable to the local technical environment, including but not limited to semiconductor based memory devices, magnetic memory devices and systems, optical memory devices and systems, fixed memory, removable memory, disc memory, flash memory, DRAM, SRAM, EEPROM and the like. Various embodiments of the processor **80c** include but are not limited to general purpose computers, special purpose computers, microprocessors, digital signal processors (DSPs) and multi-core processors. Similar embodiments are applicable to memories and processors in other devices such as the device **82** shown in Figure 8.

The mobile content optimizer application module **80e** may provide various instructions for performing steps **60-68** shown in Figure 7. The module **80e** may be implemented as an application computer program stored in the memory **80d,** but in general it may be implemented as software, firmware and/or hardware module or a combination thereof. In particular, in the case of software or firmware, one embodiment may be implemented using a software related product such as a computer readable memory (e.g., non-transitory computer readable memory), computer readable medium or a computer readable storage structure comprising computer readable instructions (e.g., program instructions) using a computer program code (i.e., the software or firmware) thereon to be executed by a computer processor. Furthermore, the module **80e** may be implemented as a separate block or may be combined with any other module/block of the device **80,** or it may be split into several blocks according to their functionality.

The device **82** may have similar components as the device **80,** as shown in Figure 8, so that the above discussion about components of the device **80** is fully applicable to the components of the device **82.** The device **82** is connected to access points (eNBs) of the network **100** via link **85** and to the PCRF via link **83** respectively.

The load and subscription status application module **87** may provide various instructions for performing steps **40-48** shown in Figure 6. The module **87** may be implemented as an application computer program stored in the memory of respective device **82,** but in general it may be implemented as software, firmware and/or hardware module or a combination thereof. In particular, in the case of software or firmware, one embodiment may be implemented using a software related product such as a computer readable memory (e.g., non-transitory computer readable memory), computer readable medium or a computer readable storage structure comprising computer readable instructions (e.g., program instructions) using a computer program code (i.e., the software or firmware) thereon to be executed by a computer processor.. Furthermore, the module **87** may be implemented as a separate block or may be combined with any other module/block of the device **82,** or it may be split into several blocks according to their functionality.

It is noted that various non-limiting embodiments described herein may be used separately, combined or selectively combined for specific applications.

Further, some of the various features of the above non-limiting embodiments may be used to advantage without the corresponding use of other described features. The foregoing description should therefore be considered as merely illustrative of the principles, teachings and exemplary embodiments of this invention, and not in limitation thereof.

It is to be understood that the above-described arrangements are only illustrative of the application of the principles of the present invention. Numerous modifications and alternative arrangements may be devised by those skilled in the art without departing from the scope of the invention, and the appended claims are intended to cover such modifications and arrangements.

## Claims

1. A method, comprising:
determining by a network element of a network core a load status of at least one access point wirelessly communicating with one or more user equipments;
adding by the network element information comprising at least the load status or a congestion status mapped from the load status of the at least one access point to a mobile content request from at least one user equipment of the one or more user equipments; and
sending by the network element to a mobile content optimizer the mobile content request with the added information for optimizing a requested mobile content using the added information
wherein the load status of the at least one access point is determined based on a load update protocol informing the network element by the at least one access point about changing of the load status of the at least one access point,
the load status of the at least one access point being determined as a maximum of a radio load, a backhaul load and a processing load of the at least one access point,
the information carried by the load update protocol including an address of the at least one access point and the congestion status,
a load update being sent by the at least one access point only when the congestion status at the at least one access point changes.

2. The method of claim 1, wherein the mobile content request comprises a video request.

3. The method of claim 1, wherein the load update protocol is a one-directional user datagram protocol.

4. The method of claim 1, wherein the load status is determined by aggregating a throughput of general packet radio service tunneling protocol tunnels to and from the at least one access point.

5. The method of claim 1, wherein the network element is a packet gateway.

6. The method of claim 1, wherein the at least one access point is an eNB.

7. The method of claim 1, further comprising:
determining by the network element of the network core a change of the load status of the at least one access point during streaming the optimized mobile content to the at least one user equipment in response to the mobile content request; and
sending by the network element to the mobile content optimizer an updated load status or an updated congestion status mapped from the updated load status of the at least one access point for further optimizing the streaming mobile content.

8. The method of claim 1, further comprising:
determining by the network element of the network core a subscription status for the at least one user equipment, wherein the subscription status is included in the added information.

9. The method of claim 8, further comprising:
further determining by the network element of the network core a change of the subscription status of the at least one user equipment during streaming the optimized mobile content to the at least one user equipment in response to the mobile content request; and
sending by the network element an updated subscription status to the mobile content optimizer for further optimizing the streaming mobile content.

10. An apparatus comprising:
at least one processor and a memory storing a set of computer instructions, in which the processor and the memory storing the computer instructions are configured to cause the apparatus to:
determine a load status of at least one access point wirelessly communicating with one or more user equipments;
add information comprising at least the load status or a congestion status mapped from the load status of the at least one access point to a mobile content request from at least one user equipment of the one or more user equipments; and
send to a mobile content optimizer the mobile content request with the added information for optimizing a requested mobile content using the added information,
wherein the load status of the at least one access point is determined based on a load update protocol informing the network element by the at least one access point about changing of the load status of the at least one access point,
the load status of the at least one access point being determined as a maximum of a radio load, a backhaul load and a processing load of the at least one access point,
the information carried by the load update protocol including an address of the at least one access point and the congestion status,
a load update being sent by the at least one access point only when the congestion status at the at least one access point changes.

## Patentansprüche

1. Verfahren, das Folgendes umfasst:
Bestimmen durch ein Netzelement eines Netzkerns eines Lastzustands mindestens eines Zugangspunkts, der mit einem oder mehreren Anwendergeräten drahtlos kommuniziert;
Hinzufügen durch das Netzelement von Informationen, die mindestens den Lastzustand oder einen Überlastungszustand, der von dem Lastzustand des mindestens einen Zugangspunkts abgebildet wird, umfassen, zu einer Anforderung eines mobilen Inhalts von mindestens einem Anwendergerät des einen oder der mehreren Anwendergeräte; und
Senden durch das Netzelement der Anforderung des mobilen Inhalts mit den hinzugefügten Informationen zum Optimieren eines angeforderten mobilen Inhalts unter Verwendung der hinzugefügten Informationen an einen Optimierer mobiler Inhalte;
wobei der Lastzustand des mindestens einen Zugangspunkts anhand eines Lastaktualisierungsprotokolls bestimmt wird, das das Netzelement durch den mindestens einen Zugangspunkt über eine Änderung des Lastzustands des mindestens einen Zugangspunkts informiert,
wobei der Lastzustand des mindestens einen Zugangspunkts als ein Maximum einer Funklast, einer Backhaul-Last und einer Verarbeitungslast des mindestens einen Zugangspunkts bestimmt wird,
wobei die durch das Lastaktualisierungsprotokoll beförderten Informationen eine Adresse des mindestens einen Zugangspunkts und den Überlastungszustand enthalten,
wobei eine Lastaktualisierung durch den mindestens einen Zugangspunkt nur dann gesendet wird, wenn sich der Überlastungszustand an dem mindestens einen Zugangspunkt ändert.

2. Verfahren nach Anspruch 1, wobei die Anforderung eines mobilen Inhalts eine Videoanforderung umfasst.

3. Verfahren nach Anspruch 1, wobei das Lastaktualisierungsprotokoll ein unidirektionales Anwenderdatagrammprotokoll ist.

4. Verfahren nach Anspruch 1 wobei der Lastzustand durch Aggregieren eines Durchsatzes von General Packet Radio Service Tunnelungsprotokoll-Tunneln zu und von dem mindestens einen Zugangspunkt bestimmt wird.

5. Verfahren nach Anspruch 1, wobei das Netzelement ein Paket-Gateway ist.

6. Verfahren nach Anspruch 1 wobei der mindestens eine Zugangspunkt ein eNB ist.

7. Verfahren nach Anspruch 1, das ferner Folgendes umfasst:
Bestimmen durch das Netzelement des Netzkerns einer Änderung des Lastzustands des mindestens einen Zugangspunkts während des Streamings des optimierten mobilen Inhalts zu dem mindestens einen Anwendergerät als Reaktion auf die Anforderung des mobilen Inhalts; und
Senden durch das Netzelement eines aktualisierten Lastzustands oder eines aktualisierten Überlastungszustands, der von dem aktualisierten Lastzustand des mindestens einen Zugangspunkts abgebildet wird, an den Optimierer mobiler Inhalte für eine weitere Optimierung des mobilen Streaminginhalts.

8. Verfahren nach Anspruch 1, das ferner Folgendes umfasst:
Bestimmen durch das Netzelement des Netzkerns eines Subskriptionszustands für das mindestens eine Anwendergerät, wobei der Subskriptionszustand in den hinzugefügten Informationen enthalten ist.

9. Verfahren nach Anspruch 8, das ferner Folgendes umfasst:
weiteres Bestimmen durch das Netzelement des Netzkerns einer Änderung des Subskriptionszustands des mindestens einen Anwendergeräts während des Streamings des optimierten mobilen Inhalts an das mindestens eine Anwendergerät als Reaktion auf die Anforderung des mobilen Inhalts; und
Senden durch das Netzelement eines aktualisierten Subskriptionszustands an den Optimierer mobilen Inhalts, um den mobilen Streaminginhalt weiter zu optimieren.

10. Vorrichtung, die Folgendes umfasst:
mindestens einen Prozessor und einen Speicher, der eine Menge von Computeranweisungen speichert, wobei der Prozessor und der Speicher, der die Computeranweisungen speichert, ausgelegt sind, zu bewirken, dass die Vorrichtung:
einen Lastzustand mindestens eines Zugangspunkts, der mit einem oder mehreren Anwendergeräten drahtlos kommuniziert, bestimmt;
Informationen, die zumindest den Lastzustand oder einen Überlastungszustand, der von dem Lastzustand des mindestens einen Zugangspunkts abgebildet wird, unfassen, zu einer Anforderung eines mobilen Inhalts von mindestens einem Anwendergerät des einen oder der mehreren Anwendergeräte hinzufügt; und
die Anforderung des mobilen Inhalts mit den hinzugefügten Informationen zum Optimieren eines angeforderten mobilen Inhalts unter Verwendung der hinzugefügten Informationen an einen Optimierer mobiler Inhalte sendet,
wobei der Lastzustand des mindestens einen Zugangspunkts anhand eines Lastaktualisierungsprotokolls bestimmt wird, das das Netzelement durch den mindestens einen Zugangspunkt über eine Änderung des Lastzustands des mindestens einen Zugangspunkts informiert,
der Lastzustand des mindestens einen Zugangspunkts als ein Maximum einer Funklast, einer Backhaul-Last und einer Verarbeitungslast des mindestens einen Zugangspunkts bestimmt wird,
die Informationen, die durch das Lastaktualisierungsprotokoll befördert werden, eine Adresse des mindestens einen Zugangspunkts und den Überlastungszustand enthalten,
eine Lastaktualisierung durch den mindestens einen Zugangspunkt nur dann gesendet wird, wenn sich der Überlastungszustand an dem mindestens einen Zugangspunkt ändert.

## Revendications

1. Un procédé, comprenant :
la détermination par un élément de réseau d'un coeur de réseau d'un état de charge d'au moins un point d'accès communiquant de manière non filaire avec un ou plusieurs équipements d'utilisateur,
l'ajout par l'élément de réseau d'informations comprenant au moins l'état de charge ou un état d'encombrement mis en correspondance à partir de l'état de charge du au moins un point d'accès avec une demande de contenu mobile provenant d'au moins un équipement d'utilisateur des un ou plusieurs équipements d'utilisateur, et
l'envoi par l'élément de réseau à un optimiseur de contenus mobiles de la demande de contenu mobile avec les informations ajoutées de façon à optimiser un contenu mobile demandé au moyen des informations ajoutées,
dans lequel l'état de charge du au moins un point d'accès est déterminé en fonction d'un protocole d'actualisation de charge informant l'élément de réseau par le au moins un point d'accès d'une modification de l'état de charge du au moins un point d'accès,
l'état de charge du au moins un point d'accès étant déterminé sous la forme d'un maximum d'une charge radio, d'une charge de liaison terrestre et d'une charge de traitement du au moins un point d'accès,
les informations transportées par le protocole d'actualisation de charge comprenant une adresse du au moins un point d'accès et l'état d'encombrement,
une actualisation de charge étant envoyée par le au moins un point d'accès uniquement lorsque l'état d'encombrement au niveau du au moins un point d'accès change.

2. Le procédé selon la revendication 1, dans lequel la demande de contenu mobile comprend une demande de vidéo.

3. Le procédé selon la revendication 1, dans lequel le protocole d'actualisation de charge est un protocole de datagramme utilisateur unidirectionnel.

4. Le procédé selon la revendication 1, dans lequel l'état de charge est déterminé par l'agrégation d'un débit de tunnels de protocole de tunnelisation de service général de radiocommunication en mode paquets de et vers le au moins un point d'accès.

5. Le procédé selon la revendication 1, dans lequel l'élément de réseau est une passerelle en mode paquets.

6. Le procédé selon la revendication 1, dans lequel le au moins un point d'accès est un eNB.

7. Le procédé selon la revendication 1, comprenant en outre :
la détermination par l'élément de réseau du coeur de réseau d'une modification de l'état de charge du au moins un point d'accès au cours de la diffusion en continu du contenu mobile optimisé vers le au moins un équipement d'utilisateur en réponse à la demande de contenu mobile, et
l'envoi par l'élément de réseau à l'optimiseur de contenus mobiles d'un état de charge actualisé ou d'un état d'encombrement actualisé mis en correspondance à partir de l'état de charge actualisé du au moins un point d'accès à des fins d'optimisation complémentaire du contenu mobile diffusé en continu.

8. Le procédé selon la revendication 1, comprenant en outre :
la détermination par l'élément de réseau du coeur de réseau d'un état d'abonnement pour le au moins un équipement d'utilisateur, l'état d'abonnement étant inclus dans les informations ajoutées.

9. Le procédé selon la revendication 8, comprenant en outre :
la détermination complémentaire par l'élément de réseau du coeur de réseau d'une modification de l'état d'abonnement du au moins un équipement d'utilisateur au cours de la diffusion en continu du contenu mobile optimisé vers le au moins un équipement d'utilisateur en réponse à la demande de contenu mobile, et
l'envoi par l'élément de réseau d'un état d'abonnement actualisé à l'optimiseur de contenus mobiles à des fins d'optimisation complémentaire du contenu mobile diffusé en continu.

10. Un appareil comprenant :
au moins un processeur et une mémoire conservant en mémoire un ensemble d'instructions informatiques, le processeur et la mémoire conservant en mémoire les instructions informatiques étant configurés de façon à amener l'appareil à :
déterminer un état de charge d'au moins un point d'accès communiquant de manière non filaire avec un ou plusieurs équipements d'utilisateur,
ajouter des informations comprenant au moins l'état de charge ou un état d'encombrement mis en correspondance à partir de l'état de charge du au moins un point d'accès avec une demande de contenu mobile provenant d'au moins un équipement d'utilisateur des un ou plusieurs équipements d'utilisateur, et
envoyer à un optimiseur de contenus mobiles la demande de contenu mobile avec les informations ajoutées de façon à optimiser un contenu mobile demandé au moyen des informations ajoutées,
dans lequel l'état de charge du au moins un point d'accès est déterminé en fonction d'un protocole d'actualisation de charge informant l'élément de réseau par le au moins un point d'accès de la modification de l'état de charge du au moins un point d'accès,
l'état de charge du au moins un point d'accès étant déterminé sous la forme d'un maximum d'une charge radio, d'une charge de liaison terrestre et d'une charge de traitement du au moins un point d'accès,
les informations transportées par le protocole d'actualisation de charge comprenant une adresse du au moins un point d'accès et l'état d'encombrement,
une actualisation de charge étant envoyée par le au moins un point d'accès uniquement lorsque l'état d'encombrement au niveau du au moins un point d'accès est modifié.
